# EUROPEAN PATENT SPECIFICATION

(11) **EP 0 411 134 B1**
(45) Date of publication and mention of the grant of the patent: **21.08.1996**
(21) Application number: 89912657.7
(22) Date of filing: 15.11.1989
(51) Int. Cl.: F04D 29/06, F04D 29/04, H01S 3/036, F16C 33/66

(54) **TURBO-BLOWER FOR LASER AND LASER OSCILLATOR USING THE SAME**
TURBOBLASVORRICHTUNG FÜR LASER UND LASEROSZILLATOR, DER DIESE VERWENDET
TURBO-SOUFFLANTE POUR LASER ET OSCILLATEUR LASER L'UTILISANT

(30) Priority: 21.12.1988 JP 322965/88
(43) Date of publication of application: 06.02.1991
(73) Proprietor: FANUC LTD., Minamitsuru-gun, Yamanashi 401-05 (JP)
(72) Inventor: FUNAKUBO, Tsutomu, Yamanashi 403 (JP); KARUBE, Norio, Tokyo 194 (JP)
(74) Representative: Jackson, Peter Arthur
(86) International application number: JP8901164
(87) International publication number: WO9007062

(56) References cited:
- EP-A- 0 152 084
- EP-A- 0 158 681
- WO-A-88/07277
- WO-A-90/10328
- DE-A- 2 555 902
- DE-A- 2 704 125
- DE-A- 3 600 126
- DE-U- 8 806 785
- JP-A- 4 941 741
- JP-A- 5 814 589
- JP-A-56 132 495
- JP-A-58 160 627
- JP-A-60 178 681
- JP-U-62 137 396
- JP-Y- 4 713 204
- US-A- 3 276 675
- PATENT ABSTRACTS OF JAPAN, vol. 7, no. 174 (E-190)[1319], 2nd August 1983; & JP-A-58 79 786 (HITACHI SEISAKUSHO K.K.) 13-05-1983
- PATENT ABSTRACTS OF JAPAN, vol. 11, no. 33 (E-476)[2480], 30th January 1987; & JP-A-61 199 687 (MITSUBISHI ELECTRIC) 04-09-1986

## Description

The present invention relates to a turbo blower for forcibly circulating a laser gas in a gas laser for generating a laser beam to machine a workpiece, and a laser oscillating apparatus employing such a turbo blower, and more particularly to a laser turbo blower which includes bearings having an increased service life, and is highly reliable and maintainable, and a laser oscillating apparatus employing such a laser turbo blower.

Recent carbon dioxide (CO₂) gas laser oscillating apparatus have been widely used for laser beam machining such as to cut metal or nonmetal materials and weld metal materials since these laser oscillating apparatus can produce a high output power and generate a laser beam of good quality. More and more such CO₂ gas laser oscillating apparatus are being used as CNC laser machining apparatus coupled to CNC (computerized numerical control) systems particularly in applications where workpieces are cut to complex configurations at high speed and with high accuracy.

A conventional carbon dioxide (CO₂) gas laser oscillating apparatus will hereinafter be described with reference to the drawings.

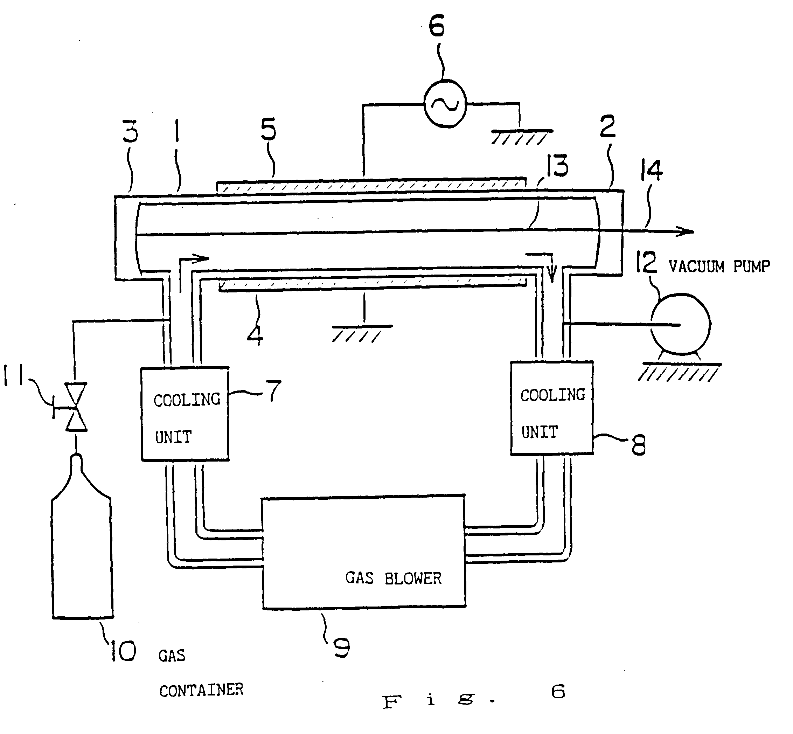

FIG. 6 shows a conventional carbon dioxide (CO₂) gas laser oscillating apparatus in its entirety. The laser oscillating apparatus includes an electric-discharge tube having an optical resonator which comprises an output coupling mirror 2 and a total reflection mirror 3 that are positioned in opposite ends of the electric-discharge tube 1. Metal electrodes 4, 5 are installed on the outer circumference of the electric-discharge tube 1. The metal electrode 4 is grounded and the metal electrode 5 is connected to a high-frequency power supply 6. When a high-frequency voltage is applied between the metal electrodes 5, 6 by the high-frequency power supply 6, a high-frequency glow discharge is produced in the electric-discharge tube 1 for laser excitation. A laser beam axis in the electric-discharge tube 1 is indicated at 13, whereas a laser beam axis from the output coupling mirror 2 is indicated at 14.

To start the gas laser oscillator apparatus of such a construction, a gas in the apparatus is first discharged out by a vacuum pump 12. Then, a valve 11 is opened to introduce a prescribed amount of laser gas from a gas container 10 into the apparatus until the pressure of the gas in the apparatus reaches a predetermined pressure level. Subsequently, the apparatus is continuously evacuated by the vacuum pump 12 and continuously supplemented with the laser gas through the valve 11. The laser gas in the apparatus is therefore continuously replaced with a fresh gas while the gas pressure in the apparatus is being kept at the predetermined presssure level. In this manner, the laser gas in the apparatus is prevented from being contaminated.

In FIG. 6, the laser gas is circulated in the apparatus by a gas blower 9 so that the laser gas is cooled. With the carbon dioxide (CO₂) gas laser, about 20 % of the applied electric energy is converted to a laser beam, and the rest is consumed to heat the laser gas. According to the theory, however, since the gain of laser oscillation is proportional to the minus (3/2)th power of the absolute temperature T, it is necessary to forcibly cool the laser gas in order to increase the oscillation efficiency. In the apparatus according to the present invention, the laser gas flows through the electric-discharge tube 1 in the direction indicated by the arrows at a speed of about 100 m/sec. and is introduced into a cooling unit 8. The cooling unit 8 mainly removes the heat energy produced by the electric discharge from the laser gas. The gas blower 9 then compresses the cooled laser gas. The compressed laser gas is then supplied through a cooling unit 7 to the electric-discharge tube 1. The compressed laser gas flows through the cooling unit 7 in order to remove the heat, which has been produced by being compressed by the gas blower 9, from the laser gas before the laser gas is introduced into the electric-discharge tube 1 again. The cooling units 7, 8 will not be described in detail as they are well known in the art.

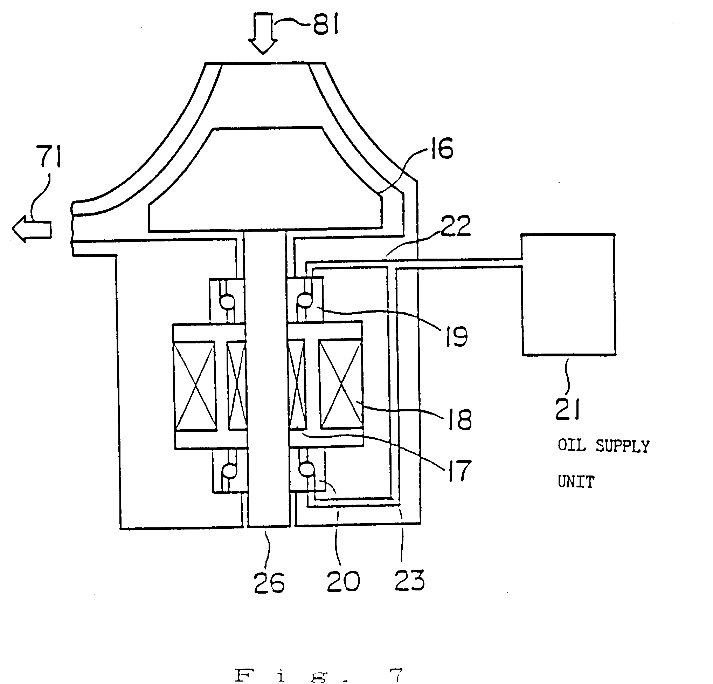

FIG. 7 shows the construction of a turbo blower used as the gas blower 9. An impeller 16 is machanically coupled to a shaft 26 on which a rotor 17 is mounted. The rotor 17 and a stator 18 disposed therearound jointly constitute a motor. The impeller 16 is rotated by the motor at a high speed of about 100,000 RPM. Therefore, the volume of the turbo blower is smaller than that of a roots blower which rotates at a lower speed, the volume being in inverse proportion to the rotational speed. The shaft 26 is supported by bearings 19, 20 with rolling elements. Since the turbo blower rotates at a high speed, the bearings 19, 20 are lubricated by an oil jet or oil air lubrication by which oil is periodically supplied. In FIG. 7, an oil supply unit 21 atomizes oil with a gas, and supplies the atomized oil to the bearings 19, 20 through passages 22, 23.

The laser gas is drawn into the laser turbo blower from the cooling unit 8 in the direction indicated by the arrow 81, and is discharged from the laser turbo blower to the cooling unit 7 in the direction indicated by the arrow 71.

The conventional laser oscillating apparatus illustrated in FIGS. 6 and 7 has the following problems:

The first problem is that since oil is used for lubricating the bearings 19, 20, the oil tends to be mixed into the laser gas and contaminate the optical components, resulting in a reduction in the laser output power and a mode change. In view of this, the laser gas in the high-power corbon dioxide (CO₂) gas laser is always being replaced, and the expenses required to replace the laser gas account for a considerable portion of the running cost of the laser oscillating apparatus. Even if the laser gas is constantly replaced, the optical parts need to be replaced or cleaned. Therefore, the maintenance of the laser oscillating apparatus requires a large expenditure of labor.

According to the second problem, when too much oil is supplied, the bearings are liable to produce an increased loss of energy because the oil in the bearings is stirred, and the bearings are affected by the temperature of the oil. The oil supply unit therefore requires sophisticated control and is hence highly costly.

The third problem is that the oil passages frequently become clogged as their diameter is small, and when they are clogged, the oil can no longer be supplied, causing seizure of the bearings.

The inventor has filed a patent application on a laser turbo blower in which grease lubrication is employed to prevent a laser gas from being contaminated by an oil mist (see Japanese Patent Application No. 63-148918). The grease lubrication is advantageous in that since only a minimum amount of oil required oozes out, the optical parts and other components are not contaminated by the oil, the laser output power is not reduced, and the laser beam characteristics are not deteriorated. Moreover, subsequent maintenance such as the supplying of oil is no longer necessary since the bearings are only required to be supplied with a predetermined amount of grease at the time the laser turbo blower is assembled. Nevertheless, it has been found that the grease lubrication is also problematic depending on the amount of grease supplied to a bearing. More specifically, the amount of grease supplied usually ranges from 30 % to 50 % of the volume of the space in the bearing. If the amount of grease supplied were greater than that range, then the grease itself would be heated and deteriorated due to its own stirring action. With the grease deteriorated, the torque would be increased, thereby reducing the efficiency. The grease would be thermally expanded to increase the pressure on the rolling surfaces of the bearing, with the result that the bearing would be fatigued and shortened in service life. Conversely, if the amount of grease supplied were smaller than the above range, the bearing would not be sufficiently lubricated, resulting in an increase in the friction of the rolling surfaces of the bearing. As a consequence, the bearing would be fatigued and shortened in service life, and produce heat due to the friction.

Accordingly, the amount of grease used must be strictly controlled in the grease lubrication. If the amount of grease used were not properly controlled, the advantages of the grease lubrication would not be attained, but the aforesaid problems would also arise.

US-A-3276675 discloses a fan in which the bearings are continuously lubricated from a grease reservoir filling the space between the shaft and a sleeve supporting the bearings.

It is an object of the present invention to provide a laser turbo blower which can optimize the amount of lubricating grease to be filled therein.

WO-A-88/07277 discloses a laser turbo blower for use in a laser oscillating apparatus, the blower comprising a pair of bearings, a shaft rotatably supported by the bearings, an impeller mounted on one end of the shaft, and a motor for rotating the shaft about its own axis, and a pair of grease reservoirs each formed adjacent to outer races of respective bearings; and according to the present invention, such a blower is characterised by the reservoirs having an annular surface which has the same radial position as the inner surface of the outer race of the bearing at the part of the bearing adjacent to the respective reservoir and a banked portion with a radius less than, but extending to, the radius of the inner surface of the outer race, for storing grease to lubricate the bearings, receiving and gathering grease scattered under centrifugal forces, and gradually returning the scattered grease to the groove of the outer race due to the viscosity of the grease and gravity.

Grease is filled in the spaces in the bearings. When the shaft rotates, the inner races, holders, and rolling elements of the bearings are rotated. Upon such rotation, the grease in the bearings is scattered from the bearings under centrifugal forces into the grease reservoirs. The grease in the grease reservoirs then gradually flows into the bearings. Since the grease is supplemented from the grease reservoirs, it is not necessary to fill the bearings with grease subsequently. Excess grease is automatically moved into the grease reservoirs under centrifugal forces. Accordingly, control over the amount of grease to be supplied is not necessary when the bearings are filled with grease. In the accompanying drawings:
FIG. 1 is a cross-sectional view of a laser turbo blower for use with a laser having a laser output power of about 1 KW, according to an embodiment of the present invention;
FIG. 2 is a fragmentary view showing the manner in which a roller bearing is lubricated by grease;
FIG. 3 is a cross-sectional view of a laser turbo blower 5 for use with a laser having a laser output power of about 2 KW, according to another embodiment of the present invention;
FIGS. 4 and 5 are cross-sectional views of laser turbo blowers according to other embodiments of the present invention;
FIG. 6 is a schematic view showing a conventional carbon dioxide (CO₂) gas laser oscillating apparatus; and
FIG. 7 is a cross-sectional view of a conventional laser turbo blower.

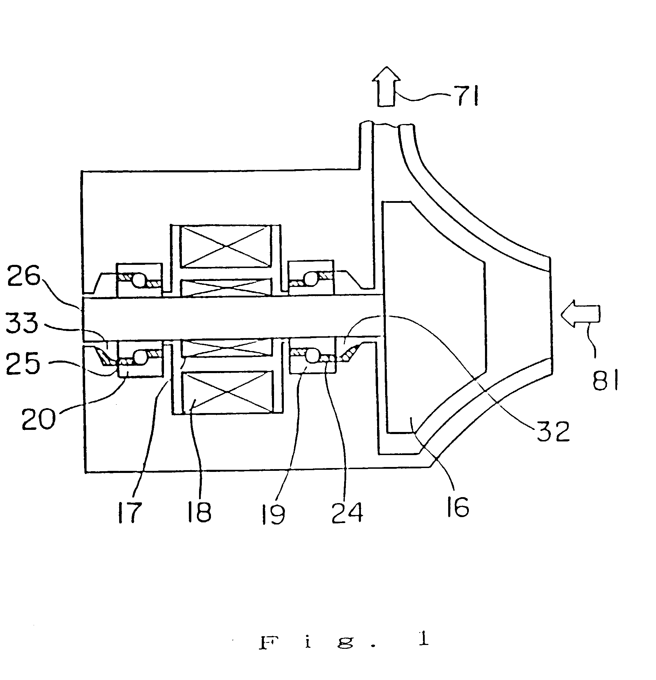

FIG. 1 shows a laser turbo blower in a laser oscillating apparatus according to the present invention. Those parts in FIG. 1 which are identical to those of FIG. 7 are denoted by identical reference numerals, and will not be described in detail below. An impeller 16 is shown as being a centrifugal impeller, but may be a mixed flow impeller or an axial-flow impeller.

The present invention essentially differs from the conventional turbo blower in that suitable amounts of grease 24, 25 are filled in spaces, except rolling elements and holders, between the inner and outer races of the ball-and-roller bearings 19, 20, and that grease reservoirs 32, 33 are defined adjacent to the bearings 19, 20, respectively. Grease to be used may be lithium grease, sodium grease, or the like. Furthermore, the axis about which the shaft 26 rotates extends parallel to the ground, i.e., the turbo blower is horizontally disposed. Therefore, the grease is efficiently held in the grease reservoirs 32, 33.

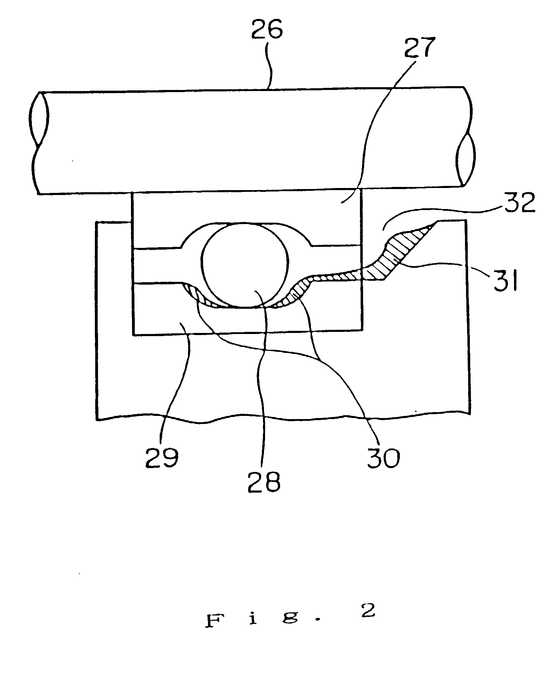

FIG. 2 shows a bearing in detail. The bearing is shown as being a deep-groove ball bearing. The bearing has an inner race 27 fixedly mounted on the shaft 26 and rotatable in synchronism with the shaft 26. Rolling elements or balls 28 sandwiched between the inner race 27 and an outer race 29 also rotate with shaft 26. As a result, grease in the inner race 27 is scattered toward the outer race 29 and the grease reservoirs 32, 33 under centrifugal forces. On both sides of the groove of the outer race 29 and in the grease reservoirs 32, 33, there are formed banks of grease 30, 31 due to a gas flow upon rotation of the inner race 27 and the balls 28. The grease 30 in the grease reservoir 32 gradually flows into the groove of the outer race 29 within the bearing due to the viscosity of the grease 30 and gravity. During rotation, oil gradually oozes from the grease in the groove of the outer race 29, forming lubricating oil films between the inner race 27 and the rolling elements 28 and also between the outer race 29 and the rolling elements 28.

Since grease is supplemented from the grease reservoir 32, it is not necessary to fill grease subsequently. Any excess grease is automatically moved into the grease reservoir 32 under centrifugal forces, a severe process of controlling the amount of grease to be filled may be dispensed with.

The turbo blower shown in FIG. 1 is employed in a laser oscillating apparatus having an output power of about 1 KW. Though a higher output power can be achieved by employing a larger compressor wheel, the same compressor wheel as shown is preferable from the standpoint of cost.

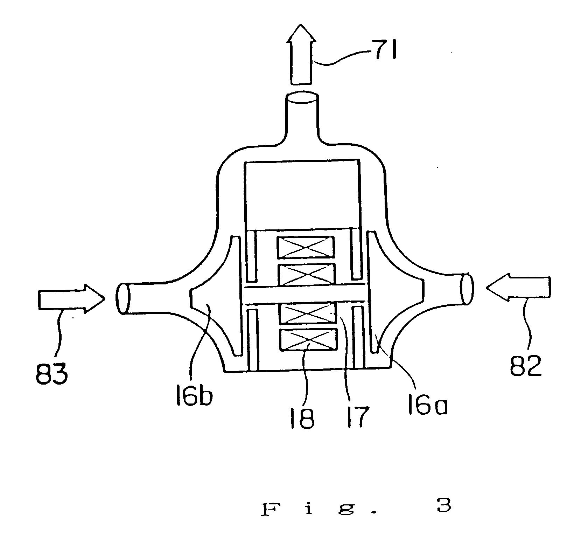

FIG. 3 illustrates the structure of a laser turbo blower for use in a laser oscillating apparatus having an output power of about 2 KW. Bearings are omitted from illustration as they are identical to those shown in FIG. 1. A laser gas from the cooling unit 8 flows into the laser turbo blower in the directions indicated by the arrows 82, 83. Two impellers 16a, 16b are mounted on the opposite ends of the shaft. The arrangement of FIG. 3 is more advantageous from the standpoint of cost since two impellers can be used while only one set of bearings and a motor is employed. The motor is composed of the rotor 17 and the stator 18. With the impellers mounted on the same shaft, variations in thrust loads are cancelled out, thrust loads are greatly reduced, stability is increased, and the service life is highly increased.

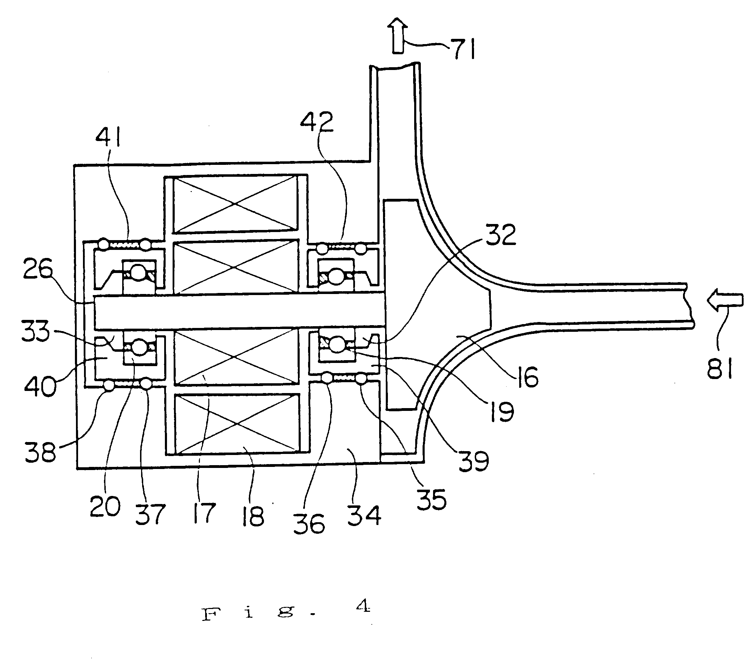

A laser turbo blower according to another embodiment will be described with reference to FIG. 4. According to this embodiment, an oil film damper is disposed around each bearing in the laser turbo blower for absorbing vibrations of the bearing. An oil film damper comprises a sleeve 39, 0-rings 35, 36, and an oil film filled between a housing 34 and the sleeve 39. A similar oil film filled between the housing 34 and the sleeve 40. Ball-and-roller bearings 19, 20 have inner races fixedly mounted on a shaft 26 and outer races fixedly mounted in the sleeves 39, 40. Gaps or clearances ranging from 10 µm to 100µm are defined between the housing 34 and the sleeves 39, 40, and are filled wih grease. The 0-rings 35, 36 and 37, 38 serve to isolate the grease or oil filled in the gaps from the laser gas. The sleeves 39, 40 have grease reservoirs 32, 33 similar to those shown in FIG. 1. With this arrangement, vibrations produced when the impeller 16 and the shaft 26 are rotated are dampened by the hydrodynamic dampening action of the oil film dampers.

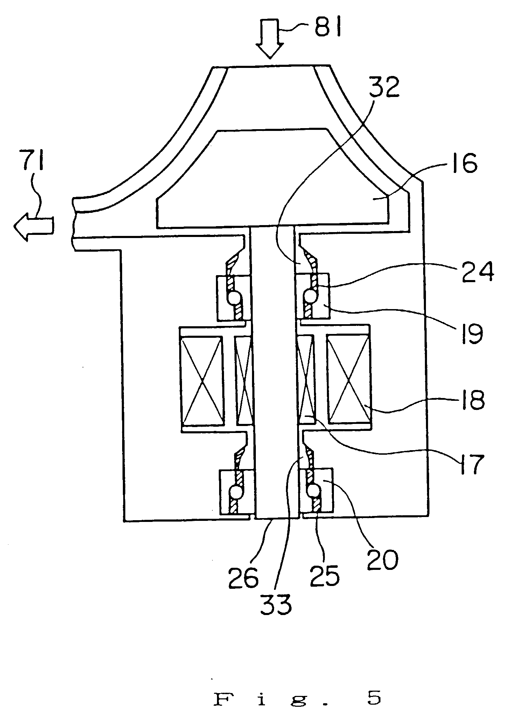

FIG. 5 shows a laser turbo blower according to still another embodiment of the present invention. In this embodiment, the axis about which the shaft 26 rotates extends perpendicularly to the ground, i.e., the turbo blower shown in FIG. 1 is vertically disposed, and grease reservoirs 32, 33 are positioned above the bearings 19, 20, respectively. Grease which is scattered from the grease reservoirs 32, 33 under centrifugal forces upon rotation of the impeller 16 gradually flows into the grooves of the outer races of the bearings due to its viscosity and gravity. Oil gradually oozes from the grease in the grooves in the outer races during rotation, thus forming lubricating oil films between the inner races and the rolling elements of the bearings and also between the cuter races and the rolling elements of the bearings.

The bearings described above may comprise ball bearings or roller bearings. These bearings may be made of a ceramic material.

With the present invention, as described above, the bearings of a blower are lubricated by grease, and grease reservoirs are defined adjacent to the bearings. Therefore, periodical inspection of grease is made unnecessary, and the bearings do not need to be replaced. Control over the amount of grease to be filled is also not necessary. Therefore, the laser turbo blower is rendered highly reliable and maintainable.

Since no oil supply unit is required, the cost of the laser turbo blower of the invention is low.

## Claims

1. A laser turbo blower for use in a laser oscillating apparatus, the blower comprising a pair of bearings (19,20), a shaft (26) rotatably supported by the bearings, an impeller (16) mounted on one end of the shaft, and a motor (17,18) for rotating the shaft about its own axis, and a pair of grease reservoirs (32,33) each formed adjacent to outer races (29) of respective bearings; (19,20) characterised by the reservoirs having an annular surface which has the same radial position as the inner surface of the outer race of the bearing at the part of the bearing adjacent to the respective reservoir and a banked portion with a radius less than, but extending to the radius of the inner surface of the outer race, for storing grease to lubricate the bearings, receiving and gathering grease scattered under centrifugal forces, and gradually returning the scattered grease to the groove of the outer race due to the viscosity of the grease and gravity.

2. A laser turbo blower according to claim 1, wherein the axis of the shaft (26) is horizontal, in use.

3. A laser turbo blower according to claim 1 or claim 2, further including another impeller (16a,16b) mounted on the opposite end of the shaft (26), whereby the shaft is subject to thrust loads in opposite directions.

4. A laser turbo blower according to any one of the preceding claims, wherein each bearing has a respective oil film damper (35,40).

5. A laser turbo blower according to any one of the preceding claims, wherein each of the bearings (19,20) is a bearing with rolling elements (28).

6. A laser turbo blower according to claim 5, wherein each of the bearings (19,20) is a roller bearing.

7. A laser turbo blower according to claim 5, wherein each of the bearings (19,20) is a ball bearing.

8. A laser turbo blower according to any one of the preceding claims, wherein each of the bearings (19,20) is made of a ceramic material.

9. A laser oscillating apparatus comprising an electric-discharge tube (1) for producing an electric discharge in a laser gas contained in the electric-discharge tube for laser excitation, an optical resonator (2,3) for effecting laser oscillation, and a gas circulating device having a blower according to any one of the preceding claims, and cooling units (7) for forcibly cooling the laser gas.

10. An apparatus according to claim 9, wherein laser excitation is effected by a high-frequency electric-discharge in the laser gas.

## Patentansprüche

1. Laser-Turbogebläse für eine oszillierende Laseranlage, wobei das Gebläse zwei Lager (19,20), eine von den Lagern drehbar abgestützte Welle (26), ein an einem Wellenende befestigtes Gebläserad (16) und einen Motor (17,18) für den Antrieb der Welle um ihre Achse und zwei Fettreservoirs (32, 33) aufweist, die jeweils neben den Außenlaufringen (29) der Lager (19, 20) ausgebildet sind, dadurch gekennzeichnet, daß die Reservoirs eine Ringfläche aufweisen, die die gleiche radiale Lage wie die Innenfläche des Lageraußenlaufrings an dem Teil des Lagers neben dem zugehörigen Reservoir, und einen Dammbereich mit einem kleineren Radius, der aber zum Radius der Innenfläche des Außenlaufringes hinführt, um Fett zur Lagerschmierung zu speichern, um von den Zentrifugalkräften abgeschleudertes Fett aufzunehmen und zu sammeln und allmählich das abgeschleuderte Fett in die Rille des Außenlaufringes infolge der Fettviskosität und der Schwerkraft zurückzuführen.

2. Laser-Turbogebläse nach Anspruch 1, bei dem im Betrieb die Achse der Welle (26) horizontal ist.

3. Laser-Turbogebläse nach Anspruch 1 oder 2, ferner mit einem weiteren Gebläserad (16a, 16b) am entgegengesetzten Ende der Welle (26), so daß die Welle Schubkräften in entgegengesetzter Richtung ausgeliefert ist.

4. Laser-Turbogebläse nach einem der vorhergehenden Ansprüche, bei dem jedes Lager mit einem Ölfilmdämpfer (35, 40) versehen ist.

5. Laser-Turbogebläse nach einem der vorhergehenden Ansprüche, bei dem jedes Lager (19, 20) ein Lager mit Wälzelementen (28) ist.

6. Laser-Turbogebläse nach Anspruch 5, bei dem jedes Lager (19, 20) ein Wälzlager ist.

7. Laser-Turbogebläse nach Anspruch 5, bei dem jedes Lager (19, 20) ein Kugellager ist.

8. Laser-Turbogebläse nach einem der vorhergehenden Ansprüche, bei dem jedes Lager (19, 20) aus Keramik besteht.

9. Oszillierende Laseranlage mit einem elektrischen Entladungsrohr (1) zum Erzeugen einer elektrischen Entladung in einem Lasergas, das zur Laseranregung in dem Entladungsrohr eingefüllt ist, mit einem optischen Resonator (2, 3) zum Ausführen der Laserschwingung und einer Gasumwälzeinrichtung mit einem Gebläse nach einem der vorhergehenden Ansprüche und mit Kühleinheiten (7) zur Zwangskühlung des Lasergases.

10. Anlage nach Anspruch 9, bei der die Laseranregung mit einer Hochfrequenz-elektrischen Entladung im Lasergas ausgeführt wird.

## Revendications

1. Une turbo-soufflante pour laser utilisable dans un appareil oscillateur laser, la soufflante comprenant une paire de paliers (19, 20), un arbre (26) rotatif supporté par les paliers, une hélice (16) montée sur une extrémité de l'arbre ainsi qu'un moteur (17, 18) pour faire tourner l'arbre autour de son propre axe, et une paire de réservoirs de graisse (32, 33) disposés chacun de manière adjacente aux chemins de roulement externes (29) de paliers respectifs (19, 20) ; caractérisée en ce que les réservoirs présentent une surface annulaire qui a la même position radiale que la surface interne du chemin de roulement externe du palier à la partie du palier adjacente au réservoir respectif et une portion surhaussée avec un rayon inférieur au rayon de la surface interne du chemin de roulement externe, mais s'étendant vers lui pour le stockage de la graisse de lubrification des paliers, pour recevoir et collecter la graisse éparpillée sous l'effet des forces centrifuges, et pour le retour progressif de la graisse éparpillée vers la gorge du chemin de roulement externe du fait de la viscosité de la graisse et de la gravité.

2. Une turbo-soufflante pour laser selon la revendication 1, dans laquelle l'axe de l'arbre (26) est horizontal pendant le fonctionnement.

3. Une turbo-soufflante pour laser selon la revendication 1 ou 2, comprenant en outre une autre hélice (16a, 16b) montée à l'extrémité opposée de l'arbre (26), de sorte que l'arbre est soumis à des charges de poussée dans des directions opposées.

4. Une turbo-soufflante pour laser selon l'une quelconque des revendications précédentes, dans laquelle chaque palier présente respectivement un film d'huile formant tampon (35, 40).

5. Une turbo-soufflante pour laser selon l'une quelconque des revendications précédentes, dans laquelle chacun des paliers (19, 20) est un palier présentant des éléments de roulement (28).

6. Une turbo-soufflante pour laser selon la revendication 5, dans laquelle chacun des paliers (19, 20) est un palier à roulement.

7. Une turbo-soufflante pour laser selon la revendication 5, dans laquelle chacun des paliers (19, 20) est un palier à billes.

8. Une turbo-soufflante pour laser selon l'une quelconque des revendications précédentes, dans laquelle chacun des paliers (19, 20) est réalisé en matière céramique.

9. Un appareil oscillateur laser comprenant un tube à décharges électriques (1) pour produire une décharge électrique dans un gaz laser contenu dans un tube à décharges électriques pour l'excitation laser, un résonateur optique (2, 3) pour effectuer l'oscillation laser, et un dispositif de circulation de gaz présentant une soufflante selon l'une quelconque des revendications précédentes, et des unités de refroidissement (7) pour le refroidissement forcé du gaz laser.

10. Un appareil selon la revendication 9, dans lequel l'excitation laser est effectuée par une décharge électrique à haute fréquence dans le gaz laser.
